# EUROPEAN PATENT APPLICATION

(11) **EP 2 767 375 A1**
(43) Date of publication of application: **20.08.2014**
(21) Application number: 13155112.9
(22) Date of filing: 13.02.2013
(51) Int. Cl.: B28D 5/04

(54) **Wire guide and a method for forming a wire guide**

(71) Applicant: Applied Materials Switzerland Sàrl, 1033 Cheseaux-sur-Lausanne (CH)
(72) Inventor: Zominy, Claude, 74350 Copponex (CH); Lei, Wei-Sheng, San Jose, CA California 95130 (US)
(74) Representative: Zimmermann & Partner

(57) **Abstract**

A method for forming a wire guide (200) is described. The method includes arranging a cylindrical unit (210) with respect to a laser source, wherein the cylindrical unit (210) includes an outer circumferential surface, and forming a wire guide (200) to be used in a wire saw device (100) by directing a laser beam generated by the laser source to the outer circumferential surface of the cylindrical unit (200) to form a circumferential groove (220) in the cylindrical unit (210). Further, a wire guide and a system for forming grooves in a wire guide are described.

## Description

### TECHNICAL FIELD OF THE INVENTION

Embodiments of the present invention relate to a wire guide for a wire saw device, a method for forming a wire guide, and a wire guide forming system. Embodiments of the present invention particularly relate to a wire guide having grooves, to a method for forming grooves in the wire guide, and to a system for forming grooves in a wire guide.

### BACKGROUND OF THE INVENTION

Wire saws are used for cutting blocks or bricks, thin slices, e.g., semiconductor wafers, from a piece of hard material such as silicon. In such devices, a wire is fed from a spool and is guided by wire guide cylinders, herein also called wire guides. The wire used for slicing the material is wound around the wire guides that are grooved to guide the wire during the cutting process. The profile of the grooves is generally V-shaped with an opening angle, deepness and a pitch from one groove to the next groove dependent on the type of wire used. For instance, the above described parameters of the grooves depend on wire characteristics such as the outer wire diameter, the wire material, or whether the wire material is straight, structured or diamond coated. The pitch of the grooves also depends on the desired thickness of the slices obtained at the end of the cutting process.

Nowadays, wire guides are grooved, for instance on a lathe, using shaping tools, that usually contain diamond. The grooves are made one by one, usually by several cutting steps. The grooving process and the shape of the tool have to be fine-tuned to take into consideration the creep of the wire guide material, in which the grooves are formed and which is often a soft coating material on the surface of a main body of the wire guide. Generally, creeping of the material of the wire guide during or after formation of the grooves occurs regularly and has an impact on the quality of the grooves. To fight against the creep and get better results, hard coatings are used to coat the surface of the wire guides. For instance, a material is chosen that has a hardness between 90-95 Shore A.

Nevertheless, forming the grooves for a wire guide in the known art is still a challenge because the repeatability, as well as the quality of the shape of the grooves on a wire guide, cannot be controlled very well.

There are several reasons why the continuing quality of the grooves cannot be maintained at a desired and defined level. A first reason is that diamond tools are used for grooving, which are subject to wear. The wear of the diamond tool during the groove forming process impacts the repeatability from the first groove on a wire guide to the last groove on the wire guide. A further reason for the limited reliability of the groove quality is that the material, in which the grooves are formed, is subject to creep, as explained above. The creep behavior of the wire guide material has to be balanced during grooving. Moreover, for balancing the creep behavior of the wire guide material, different approaches are known which vary from one manufacturer to another, or even from one wire guide to another. Therefore, a continuous quality of the wire guide grooving cannot be counted on.

Another reason for the frequently inadequate quality is the fact that some trade-off has to be made between the pitch of the grooves and the shape of the grooves. As a plurality of grooves has to be formed on a rather small length for obtaining thin slices after the cutting process, the pitch has to be set accordingly, whereby a small pitch often influences the quality of the grooves.

In view of the above, it is an object of the present invention to provide a method for forming grooves in a wire guide for a wire saw and a system for forming grooves in a wire guide for a wire saw that overcomes at least some of the problems in the art and provides a continuous and sufficient quality of the grooves.

### SUMMARY OF THE INVENTION

In light of the above, a method, a wire guide, and a laser ablation system, according to the independent claims are provided. Further aspects, advantages, and features of the present invention are apparent from the dependent claims, the description, and the accompanying drawings.

According to one embodiment, a method is provided. The method includes arranging a cylindrical unit with respect to a laser source, wherein the cylindrical unit includes an outer circumferential surface; and forming a wire guide to be used in a wire saw device by directing a laser beam generated by the laser source to the outer circumferential surface of the cylindrical unit to form a circumferential groove in the cylindrical unit.

According to another embodiment, a method is provided. The method includes arranging a cylindrical unit with respect to a laser source, wherein the cylindrical unit includes an outer circumferential surface; and forming a wire guide to be used in a wire saw device by directing a laser beam generated by the laser source to the outer circumferential surface of the cylindrical unit to form a circumferential groove in the cylindrical unit by laser ablation.

According to another embodiment, a wire guide for a wire saw device including a nominal dimension for grooves in the wire guide is provided. The wire guide includes a cylindrical unit including an outer circumferential surface; and a plurality of grooves being formed in the outer circumferential surface of the cylindrical unit by laser ablation, wherein each groove is defined by at least one actual dimension, and wherein the actual dimension of each of the grooves has a deviation of less than about 5% from the nominal dimension.

According to a further embodiment, a laser ablation system is provided. The laser ablation system includes a support for supporting a cylindrical unit to be used as a wire guide for a wire saw device, wherein the cylindrical unit includes an outer circumferential surface; a laser source being adapted for directing a laser beam to the circumferential surface of the cylindrical unit for forming a wire guide by forming a circumferential groove in the cylindrical unit by laser ablation.

Embodiments are also directed at apparatuses for carrying out the disclosed methods and include apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

### BRIEF DESCRIPTION OF THE DRAWINGS

So that the manner in which the above recited features of the present invention can be understood in detail, a more particular description of the invention, briefly summarized above, may be had by reference to embodiments. The accompanying drawings relate to embodiments of the invention and are described in the following:
- Fig. 1: shows a schematic view of a wire saw device having a wire guide according to embodiments described herein;
- Fig. 2: shows a schematic view of a wire guide having grooves according to embodiments described herein;
- Fig. 3: shows a schematic view of a section of the wire guide shown in Fig. 2;
- Fig. 4: shows a schematic view of a groove geometry in a wire guide according to embodiments described herein;
- Fig. 5: shows a schematic view of a groove geometry in a wire guide according to embodiments described herein;
- Fig. 6: shows a schematic view of a groove geometry in a wire guide according to embodiments described herein;
- Fig. 7: shows a schematic view of a groove geometry in a wire guide according to embodiments described herein;
- Fig. 8: shows a flow chart of a method according to embodiments described herein;
- Fig. 9: shows a flow chart of a method according to embodiments described herein;
- Fig. 10: shows a schematic view of a laser ablation system for forming grooves in a wire guide according to embodiments described herein; and,
- Fig. 11: shows a schematic view of a laser ablation system with an optical module for forming grooves in a wire guide according to embodiments described herein.

### DETAILED DESCRIPTION OF EMBODIMENTS

Reference will now be made in detail to the various embodiments of the invention, one or more examples of which are illustrated in the figures. Within the following description of the drawings, the same reference numbers refer to same components. Generally, only the differences with respect to individual embodiments are described. Each example is provided by way of explanation of the invention and is not meant as a limitation of the invention. Further, features illustrated or described as part of one embodiment can be used on or in conjunction with other embodiments to yield yet a further embodiment. It is intended that the description includes such modifications and variations.

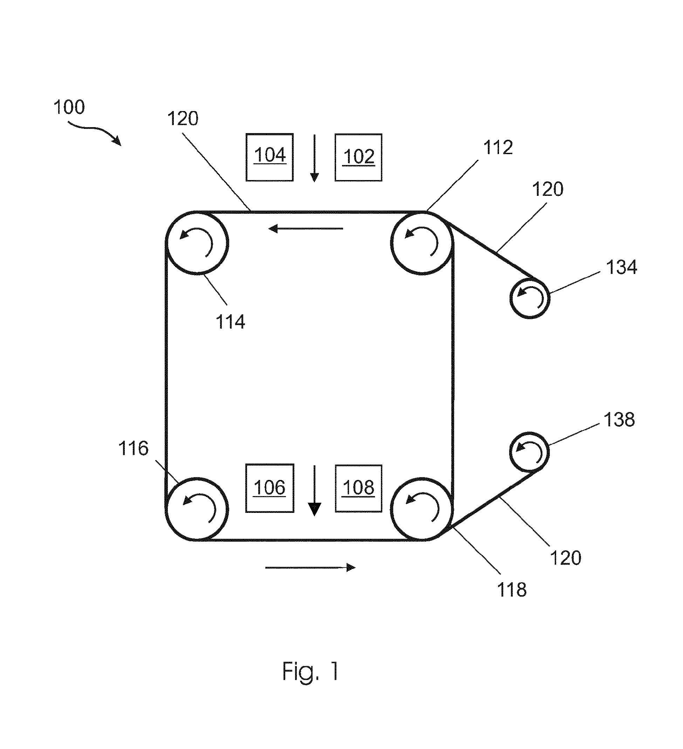

Fig. 1 shows a schematic side view of a wire saw 100 including, as an example, four wire guides 112, 114, 116, and 118 according to embodiments disclosed herein. Each wire guide 112, 114, 116, 118 may be connected to a motor or drive (not shown) for rotating the wire guide. A wire 120 may be spirally wound about, for example, the wire guides 112, 114, and forms a layer of parallel wires between the two wire guides. This layer is typically referred to as a wire web. In Fig. 1, the wire 120 is guided substantially in the direction of the straight arrows shown beside the wire 120.

During a cutting action of the wire saw 100, one or more ingots 102, 104, 106, 108 may be pushed through the wire web in order to slice it or them. This is indicated by the arrows sandwiched between ingots 102, 104, and 106, 108, respectively. The one or more ingots may be supported by a table (not shown). Alternatively, the ingots 102, 104, 106, 108 may be stationary while the wire web is pushed through it. According to embodiments, each of the one or more ingots is sliced into a multitude of wafers, such as at least 500 or even more. Typical lengths of the ingots may be in the range of up to 250 mm, in particular in the case of multi-crystalline Silicon, and up to 500 mm, in particular in case of mono-crystalline Silicon.

According to typical embodiments, a wire feed spool 134 is provided with a wire reservoir. The wire feed spool 134, if still complete, may hold the length of several hundred kilometers of wire. During operation of the wire saw, the wire is fed for the sawing process by the wire feed spool 134 to the wire guides 112, 114, 116, 118.

A wire take-up spool 138 may be provided on which the used wire 120 is recoiled. Typically, further devices such as low inertia pulleys (not shown) and tension arms (not shown), for wire tension regulation with optional digital coders on the tension arms, may be provided.

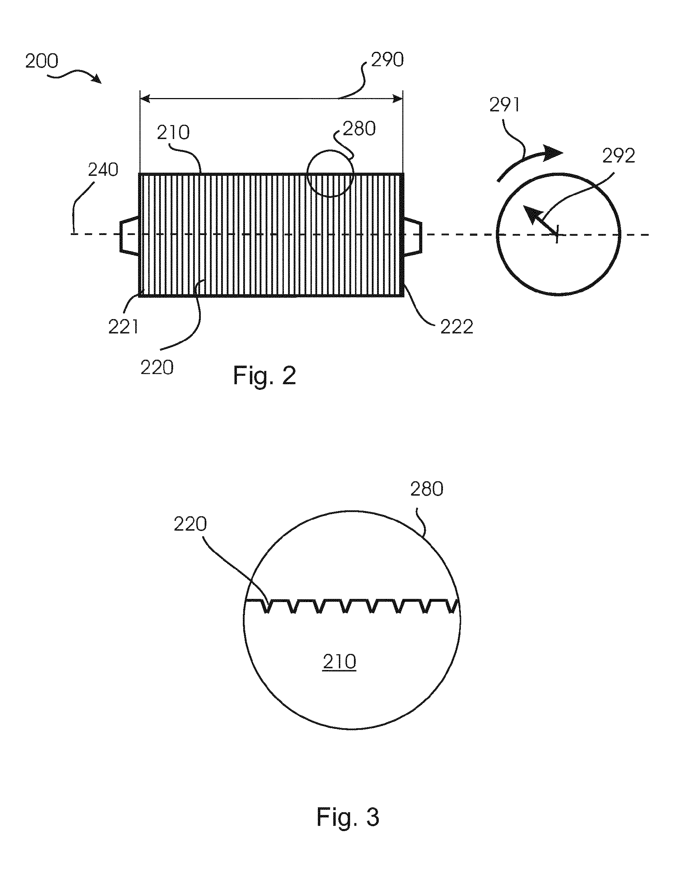

Fig. 2 shows from the left side a more detailed schematic view of a wire guide 200 according to embodiments described herein. The wire guide 200 may have a longitudinal axis 240, about which the wire guide 200 may be rotated. The wire guide 200, as described herein, may include a cylindrical unit 210, on the circumferential surface of which a plurality of grooves 220 are formed. As an example, the first groove of the plurality of grooves is denoted with reference sign 221, and the last groove is denoted with the reference sign 222.

On the right side of Fig. 2, a frontal view of the wire guide 200 is shown, indicating the radial direction 292 and the circumferential direction 291 of the wire guide or the cylindrical unit. The grooves are generally formed on the circumferential surface of the wire guide and have an extension in the radial direction 292 into the wire guide. Further, the cylindrical unit 200 may provide a width 290 in the cross direction of the wire guide which is substantially perpendicular to the radial direction 292. In the embodiment shown in Fig. 2, grooves 220 are formed over the whole width 290 of the wire guide 200.

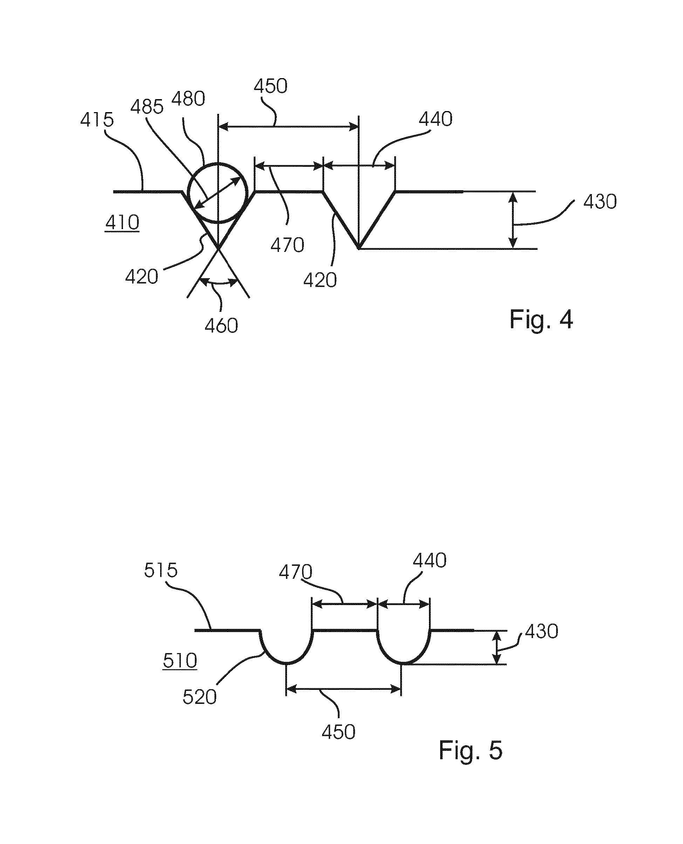

In one embodiment described herein, each groove of the plurality of grooves 220 is defined by at least one actual dimension. Fig. 3 shows a section 280 of the cylindrical unit 210 of the wire guide 200 shown in Fig. 2. In the section 280 of Fig. 3, the grooves 220, which are exemplarily shown as V-shaped grooves, can be seen in more detail. Also, the section 280 of Fig. 3 shows that each groove of the plurality of grooves 220 has an extension in several directions (the extension in one direction may also be referred to as a dimension of the groove), such as a depth in the cylindrical unit, a width and a pitch, which will be explained in detail below with respect to Fig. 4.

Generally, grooves of a wire guide have a nominal dimension, which may be a predetermined value of a dimension, or a desirable or ideal value of a dimension. In some embodiments, a nominal dimension value is equal for every groove in the cylindrical unit so that exactly one nominal dimension value exists for one dimension of the grooves. According to some embodiments, each groove may have a nominal dimension, which may, for instance, depend on the position of the groove on the wire guide. The actual dimension of the groove is the dimension the groove has after the formation in the cylindrical unit. Due to process and material variations, the actual dimension may differ from the nominal dimension. In embodiments described herein, the actual dimension of each of the grooves in the cylindrical unit has a deviation of typically less than about 5% from the nominal dimension, more typically less than about 3% from the nominal dimension, and even more typically less than about 2% of the nominal dimension for the groove.

When forming the grooves, it is desirable to form the grooves very accurately as the grooving process and the resulting groove geometry has an impact on different factors, such as the thickness of the wafers to be cut by the wire saw device, or wire vibrations during the cutting process, which are caused when the grooving pitch is not formed very regularly along the width of the wire guide.

Generally, the wire position and holding in the groove, the deepness and the shape of the groove makes sure that the wire is maintained at a defined position while the wire guide rotates. If the grooving profile is not regular, the wire could vibrate and/or jump out of one groove during the cut, thus generating wire jumps. These vibrations and/or wire jumps damage the wafers and are a source of wire breaks. The resulting interruption of the cutting process is expensive and time-consuming.

Thus, it is desirable to provide regular and reliably continuous dimensions of the grooves on the wire guide. According to some embodiments, the deviation of an actual dimension of each of the grooves from the nominal dimension being less than about 5 microns may be sufficient to obtain a satisfactory wire saw processing quality as well as a sufficient and reproducible slice quality or wafer quality, in particular regarding actual trends in wire sawing.

According to embodiments described herein, the reliably continuous shape formation with only a minor deviation of the groove geometry from the nominal dimensions is achieved by forming the grooves by laser ablation. By using laser ablation according to embodiments described herein, actual trends in the wafer production can still be handled by wire saws, which may only be possible to a limited extent when mechanical grooving is performed. Actual trends refer for instance to a decreased outer wire diameter and thinner wafer slices. While the mechanical grooving might supply a possibly sufficient groove quality for wire saws of the state of the art, it is difficult to achieve the quality adequate for actual trends in wire sawing by using mechanical grooving.

Laser ablation significantly improves the grooving process of the wire guides due to several reasons. Due to the fact that laser ablation is a non-contact grooving process, the impact of the creep of the material is for instance reduced or even wholly avoided.

By using a laser ablation technique for forming the groves in a wire guide according to embodiments described herein, geometrical dimensions, such as the deepness and the shape of the grooves may be better controlled compared to known techniques. Also, problems introduced by the wear of the diamond tools used for the grooving are avoided when using the methods and systems for forming the grooves in the wire guide according to embodiments described herein. Further, the repeatability and the quality of the grooves are strongly enhanced in wire guides according to embodiments described herein.

A further aspect of forming wire guide grooves by laser ablation is that almost arbitrary shapes of grooves may be formed. As will be explained in detail below, the laser ablation technique allows for a great variability of groove shapes, which is not - or only with an uneconomical high effort - possible when using mechanical grooving.

In Fig. 4, some possible dimensions of a groove in a wire guide according to embodiments described herein are shown. As an example of a groove shape, the grooves 420 in Fig. 4 are substantially formed in a V-like shape, but the dimensions referred to herein are not limited to a V-like shape of the groove in the wire guide, as will be seen below. In Fig.4, the grooves 420 can be seen being formed in the circumferential surface 415 of the cylindrical unit 410 of the wire guide, as explained above. According to some embodiments, the grooves 420 are formed in a coating being arranged at the circumferential surface of a body of the cylindrical unit 410.

The term "substantially" as used herein may mean that there may be a certain deviation from the characteristic denoted with "substantially." For instance, the term "substantially V-like shaped" refers to a shape which may have certain deviations from the exact V-shape, such as a deviation of about 1% to 10% of the extension of the V-shape in one direction. Further characteristics may also be denoted with "substantially" and it should be understood that a similar interpretation as exemplarily provided above with respect to the V-shape may be applied, such as an interpretation allowing a 1% to 10% deviation from the described characteristic.

The grooves of the wire guide have several geometrical dimensions. For instance, a groove 420 in a wire guide according to embodiments described herein, may have a depth 430 measured from the surface 415 of the cylindrical unit 410, a width 440 in a cross direction of the cylindrical unit at the surface 415 of the cylindrical unit 410, a pitch 450 being defined as the distance between the center of one groove to the center of the adjacent groove, a distance 470 between the end of one groove and the beginning of the adjacent groove at the surface 415 of the cylindrical unit 410 , an opening angle 460, and the like.

According to some embodiments, which may be combined with further embodiments described herein, the depth 430 of a groove ranging from the surface 415 of the cylindrical unit 410 to the bottom of the groove 420 may be typically between about 100 microns and about 250 microns, more typically between about 120 microns to about 200 microns, and even more typically between about 150 microns and about 200 microns, such as 170 microns. The width 440 of a groove may be typically between about 120 microns and about 250 microns, more typically between about 150 microns and about 230 microns, and even more typically about 220 microns. According to some embodiments, the pitch 450 may typically be between about 100 microns and about 400 microns, more typically between about 150 microns to about 350 microns, and even more typically between about 150 microns and about 200 microns. In one example, the pitch may be about 355 microns. It should be noted that the center of a groove may be defined by the middle point between the beginning of the groove at the surface of the cylindrical unit and the end of the groove at the surface of the cylindrical unit.

According to some embodiments described herein, the distance 470 between the beginning of one groove, at the surface of the cylindrical unit, and the beginning of an adjacent groove, at the surface of the cylindrical unit, may typically be between about 10 microns and about 50 microns, more typically between about 15 microns and about 30 microns, and even more typically about 20 microns. The opening angle 460 may typically be between about 30° to 100°, more typically between about 40° to about 90°, and even more typically at about 80°.

It should be understood that the values given are only examples for the respective dimension. For instance, a dimension value, such as the value for the width may depend on the groove shape and may deviate from the above discussed example values dependent on the shape.

In Fig. 4, one wire 480 is exemplarily shown in one of the grooves 420. The wire 480 may have an outer wire diameter 485 of typically about 50 microns to 200 microns, more typically about 70 microns to 150 microns, and even more typically between about 80 microns to about 140 microns.

According to some embodiments, the cylindrical unit of the wire guide as described herein, may have a width in a cross direction of typically about 500 mm to about 1000 mm, more typically between about 600 mm to about 800 mm, and even more typically of about 700 mm. The width of the cylindrical unit in the cross direction is exemplarily shown in Fig. 2 as width 290. The number of grooves formed on the surface of the cylindrical unit of the wire guide may exemplarily be between typically about 1000 and about 6000 grooves, more typically between 1200 and about 4000 grooves, and even more typically between about 1700 and about 3500 grooves on one wire guide.

According to embodiments described herein, the above described dimensions like depth 430, width 440, pitch 450, opening angle 460, and distance 470 may deviate less than about 5 microns, or less than 5% from the nominal dimension of the wire guide. The accuracy of a deviation of less than about 5% of each of the grooves over the whole width of the cylindrical unit (such as the width 290 shown in Fig. 2) may be achieved by using a laser ablation technique for forming the grooves as described in embodiments herein.

It should also be noted that a nominal value for a dimension of the groove, as mentioned above, may change over the width of the cylindrical unit. For instance, referring back to Fig. 2, the groove 221 at the left side of the cylindrical unit may have a different dimension than groove 222 at the right side of the cylindrical unit due to different nominal values for these grooves. In one example, the nominal value for the pitch differs when going from the left side of the wire guide to the right side of the wire guide. In other words, the values for the pitch of the groove may differ from each other (and may for instance have a difference to each other greater than 5% of the pitch), but may differ from the specific nominal value for the respective pitch only by 5% or even less.

With the deviation of a dimension of less than about 5% from the nominal dimension, the following dimension deviations may occur in a wire guide according to embodiments described herein. For instance, the deviation of the depth 430 from a nominal depth may typically be less than about 12 microns, more typically less than about 8 microns, and even more typically less than about 5 microns. The deviation of the width 440 from a nominal width may typically be less than about 12 microns, more typically less than about 10 microns, or even more typically less than about 5 microns. The deviation of the pitch 450 from a nominal pitch may typically be less than 20 microns, more typically less than about 10 microns, and even more typically less than about 7.5 microns.

The deviation of the opening angle 460 from a nominal opening angle may typically be less than 5°, more typically less than about 4°, and even more typically less than about 3°. The deviation of the distance 470 from a nominal distance may typically be less than about 3 microns, more typically less than about 2 microns, and even more typically less than about 1 micron.

In some embodiments, especially when the deviation of the actual dimension of the groove from the nominal dimension of the groove is less than 3%, the deviation of the depth 430 from the nominal depth may typically be less than about 7 microns, more typically less than about 5 microns, and even more typically less than about 3 microns. The deviation of the width 440 from the nominal width may typically be less than about 7 microns, more typically less than about 5 microns, or even more typically less than about 4 microns. The deviation of the pitch 450 from the nominal pitch may typically be less than about 12 microns, more typically less than about 6 microns, and even more typically less than 4.5 microns.

The deviation of the opening angle 460 from the nominal opening angle may typically be less than about 3°, more typically less than about 2°, and even more typically less than about 1°. The deviation of the distance 470 from the nominal distance may typically be less than about 2 microns, more typically less than about 1 micron and less than about 0.6 micron.

In some embodiments, however, about 1% of the grooves may have a deviation of the actual dimension from the nominal dimension which exceeds the above referenced values, e.g. about 1% of the grooves may have a deviation of the actual dimension from the nominal dimension being larger than 5%.

The cylindrical body of the wire guide according to embodiments described herein may be made of steel or carbon fiber reinforced polymer (CFRP) material and may be coated on the cylindrical surface with a soft material, such as a polymer material, e.g. a polyurethane compound. According to some embodiments, the grooves having the above described reliability in the geometrical dimensions from the first to the last groove may be formed in the soft material coating of the cylindrical unit by laser ablation.

In using a laser ablation technique for forming grooves in a wire guide, finer grooves may be formed on the surface of the cylindrical unit. Generally, the market trend is to reduce wafer thickness and to reduce kerf by using finer wires. Thus, the mechanical grooving will, sooner or later, be faced with dimension limitations, which are not present, when using laser ablation technology. When using a laser ablation technique according to embodiments described herein, a smaller pitch for a smaller wafer thickness can be achieved.

The laser ablation technology presents further benefits, like the possibility to form and use new shapes for the grooves, thus allowing a better positioning and holding of the wire during the sawing process. In known wire guides, V-shapes are used for the grooves because of the limitations of the diamond tools. However, with the method and the system according to embodiments described herein, shapes with rounded or flat bottoms or with different kinds of slopes can be generated, as will be shown below with respect to Figs. 5 to 7.

Fig. 5 shows a schematic view of the surface 515 of a cylindrical unit 510 of a wire guide. The grooves 520, which are formed on the surface 515 of the cylindrical unit 510, exemplarily have a U-like shape. According to some embodiments, the grooves 520 on the surface 515 of the cylindrical unit 510 may have the same dimensions as described with respect to Fig. 4, such as a depth 430, a width 440 in a cross direction of the cylindrical unit, a pitch 450, and a distance 470 between the beginning of one groove and the beginning of an adjacent groove at the surface of the cylindrical unit 510.

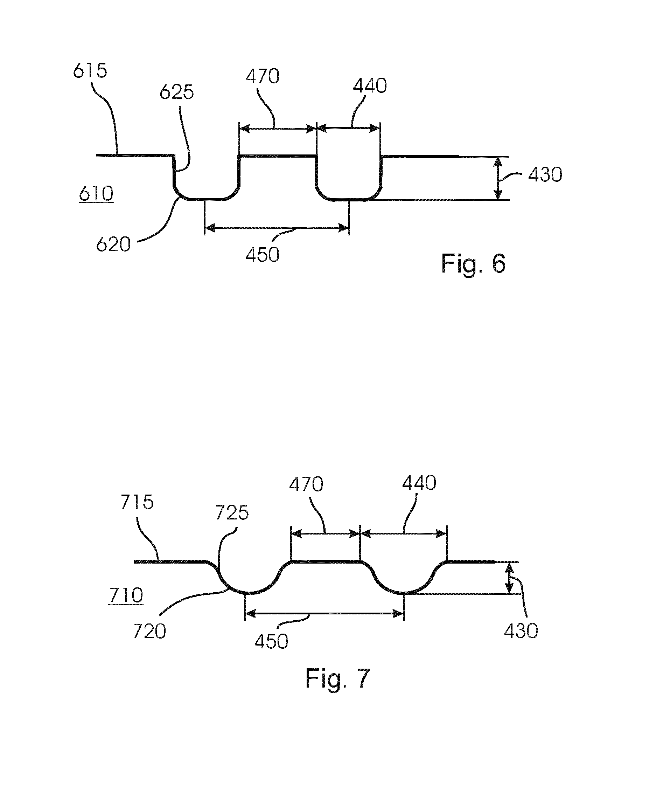

Fig. 6 shows a schematic view of the surface 615 of a cylindrical unit 610 of a wire guide. The grooves 620 formed on the surface 615 of the cylindrical unit 610 exemplarily have a shape with a flat bottom and steep slopes of the groove walls 625. As can be seen in the embodiment of Fig. 6, the groove walls 625 extend substantially at 90° to the surface 615 of the cylindrical unit 610. According to some embodiments, the grooves 620 on the surface 615 of the cylindrical unit 610 may have the same dimensions as described with respect to Fig. 4, such as a depth 430, a width 440 in a cross direction, a pitch 450, and a distance 470 between the beginning of one groove and the beginning of an adjacent groove at the surface of the cylindrical unit 610.

Fig. 7 shows a schematic view of the surface 715 of a cylindrical unit 710 of a wire guide. The grooves 720 formed on the surface 715 of the cylindrical unit 710 exemplarily have shape with a round bottom. Also, the slope of the groove walls 725 is less steep, than, for instance, the slope of groove walls 625 of Fig. 6. According to some embodiments, the grooves 720 on the surface 715 of the cylindrical unit 710 may have the same dimensions as described with respect to Fig. 4, such as a depth 430, a width 440 in a cross direction, a pitch 450, and a distance 470 between the beginning of one groove and the beginning of an adjacent groove at the surface of the cylindrical unit 710.

Although Figs. 4 to 7 show some examples of groove shapes, it should be understood that the shape of the grooves formed by laser ablation may be arbitrarily chosen. For instance, a laser ablation system as described below may be adjusted in order to also form groove shapes being not shown in the figures, but which may include asymmetric or stepped groove shapes.

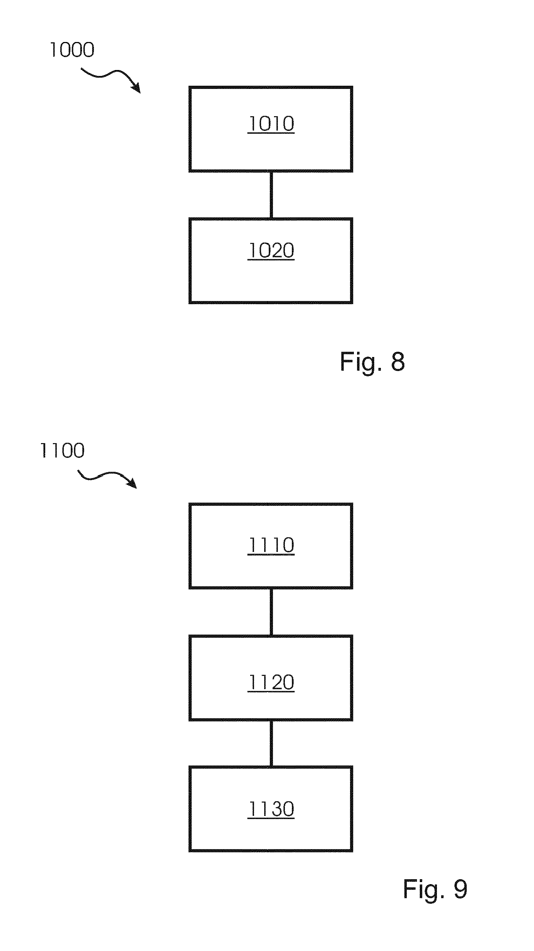

In Fig. 8, a flow chart 1000 of a method is shown for forming a wire guide according to embodiments described herein. According to some embodiments, the grooves in a wire guide, which may be a wire guide as described above, may be formed by arranging a cylindrical unit with respect to a laser source in box 1010. For instance, the cylindrical unit may be arranged so as to be able to rotate about the longitudinal axis of the cylindrical unit. In some embodiments, the method includes driving the cylindrical unit by a drive unit or the like. The cylindrical unit may further include an outer circumferential surface, which runs around the cylindrical unit. In box 1020, a laser beam generated by the laser source may be directed to the outer circumferential surface of the cylindrical unit to form a circumferential groove in the cylindrical unit by laser ablation. According to some embodiments, the grooves formed by laser ablation may have the characteristics described above with respect to Figs. 2 to 7.

For instance, the number of grooves in one wire guide may be between typically about 1000 and about 6000 grooves, more typically between 1200 and about 4000 grooves, and even more typically between about 1700 and about 3500 grooves. Also, the grooves may be formed so as to be adapted to guide a wire having an outer diameter of typically about 50 microns to 200 microns, more typically about 70 microns to 150 microns, and even more typically between about 80 microns to about 140 microns. Thus, the dimensions of the groove may be adapted so that a wire having such diameters may slide reliably and stably through the grooves, thereby passing the wire guide.

Fig. 9 shows a flow chart 1100 of a method for forming a groove in a wire guide for a wire saw. Boxes 1110 and 1120 may correspond to boxes 1010 and 1020 of method 1000, respectively, as described above. In the flow chart 1100, the cylindrical unit may be made from steel or CFRP and may be coated on the circumferential surface with a polymer coating such as a polyurethane compound. Method 1100 further includes forming the groove by laser ablation in a polymer coating of the cylindrical unit in box 1130.

In some embodiments, the method for forming a groove may include forming grooves having a U-type cross-sectional shape, a V-type cross-sectional shape, a shape providing a flat bottom of the groove, a shape providing a round bottom of the groove, or a groove shape having an opening angle of from about 30° to about 90°, as exemplarily shown in Figs. 4 to 7.

According to embodiments described herein, the method for forming grooves in a cylindrical unit may include scanning the laser beam across the width of the cylindrical unit in order to form a plurality of substantially parallel grooves in the cylindrical unit.

The beam generated by the laser source may be guided to the cylindrical unit by means of optical components, such as a beam scanning optical module. According to some embodiments, the laser beam may be deflected or redirected by optical components before hitting the cylindrical unit for forming grooves. For instance, the generated laser beam may be displaced in the width direction by typically between about 100 microns and about 400 microns, more typically between about 150 microns to about 350 microns, and even more typically between about 150 microns and about 200 microns before cutting the next groove. In some embodiments, the laser beam is displaced so as to provide a desired pitch of adjacent grooves.

The method according to embodiments described herein may also include controlling parameters of the laser for adapting the laser to the material, in which the grooves are to be formed. For instance, a control unit may be provided for performing a control step. In one embodiment, the control unit may monitor at least one of the groove dimensions and adapt the parameter of the laser source accordingly, i.e. amend the setting of the laser source, when a deviation of more than 5%, or more than 5 microns, is detected. In some embodiments, the control unit may be connected to one or more sensor devices, which may deliver information about the groove dimension. The control unit may calculate from the received information of the sensor device, whether or not an amendment of the settings of the laser source is desirable, and if so, calculates to what extent an amendment of the settings needs to be made.

When performing the method according to embodiments described herein, a deviation of the actual dimension of the grooves from the nominal dimension may be achieved, which is less than 5% of the nominal dimension, or less than 5 microns from the nominal dimension, as explained in detail above.

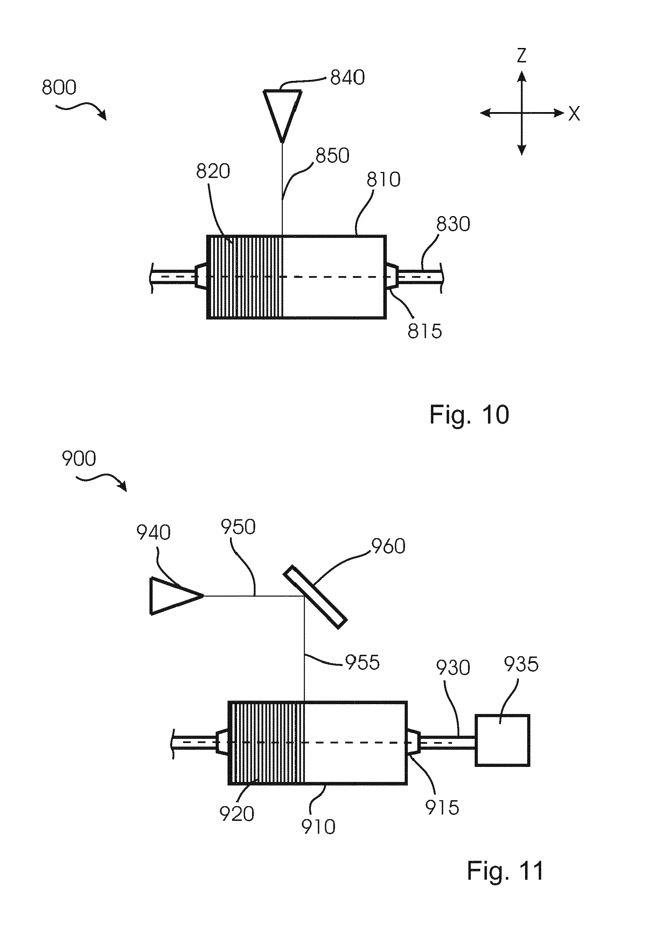

Fig. 10 shows a laser ablation system 800, which may be used to perform the above described methods and/or to form the wire guide as described above. In Fig 10, a cylindrical unit 810 is provided, which may be held by a support 830 for supporting the cylindrical unit to be used as a wire guide. According to some embodiments, the cylindrical unit may have connection parts 815 for connecting the cylindrical unit 810 to the support 830 of the laser ablation system 800.

The laser ablation system 800 may further include laser source 840 being adapted for generating and directing a laser beam 850 to the circumferential surface of the cylindrical unit 810 to form a circumferential groove 820 in the cylindrical unit 810 by laser ablation. In the embodiment shown in Fig. 10, the laser beam 850 has already cut several grooves 820 in the circumferential surface of the cylindrical unit 810, whereas a part of the cylindrical unit 810 is not yet treated by laser ablation. According to some embodiments, the laser source 840 may move along (e.g. substantially parallel to) the surface of the cylindrical unit 810 in x-direction in order to cut grooves in the cylindrical unit.

According to some embodiments, the cylindrical unit 810 as well as the grooves 820 may have the characteristics as described above. For instance, the laser ablation system may be adapted for forming about 1200 to about 3500 grooves in the circumferential surface of the cylindrical unit. Also, the laser beam may be suitable for cutting grooves having a desired shape, such as the groove shapes shown in Figs. 4 to 7.

In some embodiments, which may be combined with other embodiments described herein, the laser ablation system may have an adjustment unit in order to adjust the laser source not only in the x-direction along the surface of the cylindrical unit, but also in z-direction perpendicular to the surface of the cylindrical unit (directions shown in Fig. 10). For instance, the polyurethane coating on the cylindrical unit, in which the grooves are formed, may be subject to wear. Thus, when the wear of the grooves influences the accuracy of the grooves negatively, the grooves may be erased from the coating and a new grooving is made in the coating. In some embodiments, a defined layer of the coating is removed, such as a layer having a thickness of about 2 mm, and new grooves are formed on the new surface of the coating. According to some embodiments, the laser source is positioned at a defined height with respect to the surface of the cylindrical unit. For instance, the laser source may be moved in the z-direction at the beginning of the process for typically about 0 mm to about 20 mm, more typically for about 0 mm to about 12 mm, and even more typically for about 0 mm to about 10 mm. In some embodiments, the wire guide diameter after removing a defined layer of the coating is accurately measured, and the movement of the laser source in z-direction is performed dependent on the measured diameter.

According to some embodiments, which may be combined with other embodiments described herein, the laser ablation system may be adapted to form grooves in a cylindrical unit having different nominal dimension values. For instance, the laser ablation system may be adapted for storing nominal values of dimensions for each groove, and may further be adapted for forming the grooves according to the stored nominal values with a deviation of less than 5%, as explained in detail above.

In embodiments of the laser ablation system or the method for forming grooves in a wire guide as described herein, any feasible laser source may be used. Preferably, the laser source is a high frequency pulsed solid state laser being adapted to provide a pulse width of about 1ps to about 200 ns, and a wavelength of typically about 100 nm to about 800 nm, more typically between about 250 nm and about 600 nm, and even more typically of about 300 nm and about 500 nm. Further, the laser source used in a laser ablation system according to embodiments described herein may provide a pulse repetition frequency of about 100 kHz or higher.

Examples of such a laser source include a third harmonic solid state laser with its wavelength about 355nm (340-360nm), pulse width in the range of 5 ps to 15ps such as from a disc laser, or in the range of 1 ns to 100 ns such as from a diode pumped solid state laser or a fiber laser.

According to some embodiments, the laser beam may have a Gaussian profile, or a shaped profile such as a top hat profile, depending on groove dimension requirements.

Fig. 11 shows an embodiment of a laser ablation system 900 having a support 930 for holding a cylindrical unit 910 with connection parts 915 and a laser source 940 for generating a laser beam 950. According to some embodiments described herein, the support 930 of the laser ablation system 940 may be adapted for rotating the cylindrical unit 910 while the laser beam forms the grooves 920 in the circumferential surface of the cylindrical unit 910. For instance, the support 930 may be connected to a drive 935, which may be a motor or the like.

As can be seen in Fig. 11, the laser ablation system 900 includes a beam scanning optical module 960 for directing the laser beam 950 to a desired position of the cylindrical unit 910. The deflected laser beam 955 is able to form the grooves in the cylindrical unit 910 according to the adjustment of the optical module 960. In one example, the laser beam 950, generated by a laser source 940, passes through a beam scanning optical module 960, such as a Galvanometric scanning system or a polygon mirror scanning system, before hitting the cylindrical unit 910. The beam scanning optical module 960 may be used to reposition the laser beam to the next groove location after the completion of scribing one groove.

According to some embodiments, the beam scanning optical module as described herein may be suitable for being adjustable, for instance by adjusting the angle of the optical module to the incoming laser beam. The beam scanning optical module may be driven by a drive unit in order to provide different settings of the optical module. Different settings of the optical module may allow the laser beam being scanned over the whole width of the cylindrical unit, e.g. without moving the laser source itself.

When using the described laser ablation system, according to embodiments, a deviation of the actual dimension of the grooves from the nominal dimension may be achieved which is less than 5% of the nominal dimension, or less than 5 microns from the nominal dimension, as explained in detail above.

It should be noted that the components described in embodiments of the laser ablation system may also be used for performing embodiments of a method for forming a wire guide, and vice versa. The features described herein with respect to a system, a wire guide, or a method may also be used in embodiments of the method, the system, or the wire guide, respectively.

While the foregoing is directed to embodiments of the invention, other and further embodiments of the invention may be devised without departing from the basic scope thereof, and the scope thereof is determined by the claims that follow.

## Claims

1. A method (1000; 1100) comprising:
arranging a cylindrical unit (210; 410; 510; 610; 710; 810; 910) with respect to a laser source (840; 940), wherein the cylindrical unit (210; 410; 510; 610; 710; 810; 910) includes an outer circumferential surface (415; 515; 615; 715),
forming a wire guide (112; 114; 116; 118; 200) to be used in a wire saw device (100) by directing a laser beam (850; 950; 955) generated by the laser source (840; 940) to the outer circumferential surface (415; 515; 615; 715) of the cylindrical unit (210; 410; 510; 610; 710; 810; 910) to form a circumferential groove (220; 420; 520; 620; 720; 820; 920) in the cylindrical unit (210; 410; 510; 610; 710; 810; 910).

2. The method according to claim 1, wherein the method further comprises forming about 1200 to about 4000 grooves (220; 420; 520; 620; 720; 820; 920) in the outer cylindrical surface (415; 515; 615; 715) of the cylindrical unit (210; 410; 510; 610; 710; 810; 910) by laser ablation.

3. The method according to any of the preceding claims, wherein the cylindrical unit (210; 410; 510; 610; 710; 810; 910) comprises a cylindrical main body being coated with a polymer, and wherein forming the wire guide further comprises forming the circumferential groove (220; 420; 520; 620; 720; 820; 920) in the polymer coating.

4. The method according to any of the preceding claims, wherein forming the wire guide further comprises forming a groove (220; 420; 520; 620; 720; 820; 920) in the outer cylindrical surface (415; 515; 615; 715) of the cylindrical unit (210; 410; 510; 610; 710; 810; 910); and
wherein forming the groove (220; 420; 520; 620; 720; 820; 920) comprises forming a groove having
a width (440) in a cross direction of the cylindrical unit (210; 410; 510; 610; 710; 810; 910), wherein the width (440) is about 150 microns to about 230 microns, and/or
a depth (430) of the groove in a radial direction of the cylindrical unit (210; 410; 510; 610; 710; 810; 910), wherein the depth (430) is about 150 microns to about 200 microns, and/or
a pitch (450) from the center of one groove to the center of an adjacent groove, wherein the pitch is about 150 microns to about 200 microns.

5. The method according to any of the preceding claims, wherein forming a wire guide (112; 114; 116; 118; 200) comprises forming the groove (220; 420; 520; 620; 720; 820; 920) and scanning the laser beam (850; 950; 955) over the width (290) of the cylindrical unit (210; 410; 510; 610; 710; 810; 910) in a cross direction of the cylindrical unit (210; 410; 510; 610; 710; 810; 910).

6. A wire guide (112; 114; 116; 118; 200) for a wire saw device (100) including a nominal dimension for grooves in the wire guide, the wire guide comprising:
a cylindrical unit (210; 410; 510; 610; 710; 810; 910) comprising an outer circumferential surface (415; 515; 615; 715); and,
a plurality of grooves (220; 420; 520; 620; 720; 820; 920) being formed in the outer circumferential surface (415; 515; 615; 715) of the cylindrical unit (210; 410; 510; 610; 710; 810; 910) by laser ablation, wherein each groove (220; 420; 520; 620; 720; 820; 920) is defined by at least one actual dimension (430; 440; 450; 460; 470);
wherein the actual dimension (430; 440; 450; 460; 470) of each of the grooves (221) has a deviation of less than about 5% from the nominal dimension (430; 440; 450; 460; 470).

7. The wire guide according to claim 6, wherein the deviation of the actual dimension is less than about 3% from the nominal dimension (430; 440; 450; 460; 470) and/or wherein the deviation of the actual dimension is less than about 5 microns from the nominal dimension.

8. The wire guide according to any of claims 6 or 7, wherein
a dimension of the groove (220; 420; 520; 620; 720; 820; 920) is the width (440) of the groove in a cross direction of the cylindrical unit (210; 410; 510; 610; 710; 810; 910) and wherein the width (440) is about 150 microns to about 230 microns, and/or
wherein a dimension of the groove (220; 420; 520; 620; 720; 820; 920) is the depth (430) of the groove in a radial direction of the cylindrical unit (210; 410; 510; 610; 710; 810; 910) and wherein the depth (430) is about 150 microns to about 200 microns, and/or
wherein a dimension of the groove (220; 420; 520; 620; 720; 820; 920) is the pitch (450) from the center of one groove to the center of an adjacent groove and wherein the pitch is about 150 microns to about 200 microns.

9. The wire guide according to any of claims 6 to 8, wherein the plurality of grooves comprises about 1200 and 4000 grooves, and wherein the width (290) of the cylindrical unit (210; 410; 510; 610; 710; 810; 910) in cross-direction is between about 500 mm to about 1000 mm.

10. The wire guide according to any of claims 6 to 9, wherein the cylindrical unit (210; 410; 510; 610; 710; 810; 910) comprises a cylindrical main body being coated with a polymer, and wherein the grooves (220; 420; 520; 620; 720; 820; 920) are formed in the polymer coating.

11. A laser ablation system (800; 900), comprising:
a support (830; 930) for supporting a cylindrical unit (210; 410; 510; 610; 710; 810; 910) to be used as a wire guide (112; 114; 116; 118; 200) for a wire saw device (100), wherein the cylindrical unit (210; 410; 510; 610; 710; 810; 910) comprises an outer circumferential surface (415; 515; 615; 715);
a laser source (840; 940) being adapted for directing a laser beam (850; 950) to the circumferential surface (415; 515; 615; 715) of the cylindrical unit (210; 410; 510; 610; 710; 810; 910) for forming a wire guide (112; 114; 116; 118; 200) by forming a circumferential groove (220; 420; 520; 620; 720; 820; 920) in the cylindrical unit (210; 410; 510; 610; 710; 810; 910) by laser ablation.

12. The laser ablation system according to claim 11, wherein the laser source (840; 940) is adapted to provide a pulse width of about 1ps to about 200 ns, a wavelength of about 250 nm to about 600 nm and/or a pulse repetition frequency of about 100 kHz or higher.

13. The laser ablation system according to any of claims 11 to 12, wherein the laser ablation system (800; 900) is adapted for forming about 1200 to about 4000 grooves (220; 420; 520; 620; 720; 820; 920) in the circumferential surface (415; 515; 615; 715) of one cylindrical unit (210; 410; 510; 610; 710; 810; 910), and wherein the width (290) of the cylindrical unit (210; 410; 510; 610; 710; 810; 910) in a cross direction is between about 500 mm and about 1000 mm.

14. The laser ablation system according to any of claims 11 to 13, wherein the laser source (840; 940) is adapted to form the circumferential groove (220; 420; 520; 620; 720; 820; 920) having a U-type cross-sectional shape, a V-type cross-sectional shape, a shape providing a flat bottom of the groove, or a groove shape having an opening angle of from about 30° to about 90°.

15. The laser ablation system according to any of claims 11 to 14, wherein the laser ablation system (900) includes an optical module (960) for scanning the laser beam (950; 955).
